# EUROPÄISCHE PATENTSCHRIFT

(11) **EP 3 267 619 B1**
(45) Veröffentlichungstag und Bekanntmachung des Hinweises auf die Patenterteilung: **22.05.2019**
(21) Anmeldenummer: 17179815.0
(22) Anmeldetag: 05.07.2017
(51) Int. Cl.: H04L 9/32, H04L 29/06

(54) **VERFAHREN ZUR HERSTELLUNG EINER AUSFALLSICHERUNG IN EINEM NETZWERK**
METHOD FOR PRODUCING FAULT PREVENTION IN A FRAMEWORK
PROCÉDÉ DE FABRICATION D'UNE SÉCURITÉ INTÉGRÉE DANS UN RÉSEAU

(30) Priorität: 05.07.2016 DE 102016112278
(43) Veröffentlichungstag der Anmeldung: 10.01.2018
(73) Patentinhaber: MTG AG, 64293 Darmstadt (DE)
(72) Erfinder: Gerrits, Augustinus, 64347 Griesheim (DE); Ludwig, Oswald, 64665 Alsbach-Hähnlein (DE)
(74) Vertreter: Habermann Intellectual Property Partnerschaft von Patentanwälten mbB

(56) Entgegenhaltungen:
- KR-A- 20090 127 575
- US-A1- 2011 154 018
- US-A1- 2013 346 747
- US-A1- 2016 063 466
- US-A1- 2016 191 253

## Beschreibung

Die vorliegende Erfindung betrifft ein Verfahren zur Herstellung einer Ausfallsicherung in einem Netzwerk umfassend einen Client, einen ersten Server und einen zweiten Server, wobei der Client zunächst auf einen ersten Server und beim Ausfall des ersten Servers auf einen zweiten Server zugreift.

Die Erfindung ist im unhabhängigen Anspruch 1 definiert. Die abhängigen Ansprüche definieren weitere Ausführungsbeispiele.

Die Patentanmeldungen US2016191253 A1, US2016063466 A1, US2011154018 A1, KR20090127575 und US2013346747 A1 stellen einen weiteren Teil vom Stand der Technik dar.

Aus dem Stand der Technik sind Systeme bekannt, in denen Netzwerkteilnehmer ihre Identität mittels digitaler Zertifikate nachweisen. Die Ausstellung des Zertifikats erfolgt durch eine üblicherweise offizielle Zertifizierungstelle, eine Certification Authority (CA), der die Teilnehmer vertrauen. Ein Zertifikat enthält in der Regel Informationen zum Inhaber des Zertifikats und zur Gültigkeitsdauer des Zertifikats sowie einen öffentlichen Schlüssel des Inhabers des Zertifikats. Der Inhaber des Zertifikats besitzt darüber hinaus einen zum öffentlichen Schlüssel passenden privaten Schlüssel. Öffentliche und private Schlüssel kommen in asymmetrischen Kryptographiesystemen zur Verwendung. Als Inhaber des Zertifikats wird derjenige bezeichnet, der sich mittels des Zertifikats und des zugehörigen privaten Schlüssels authentifizieren kann.

Mit dem privaten Schlüssel kann er eine digitale Nachricht, die mit seinem öffentlichen Schlüssel verschlüsselt wurde, wieder entschlüsseln. Eine mit seinem privaten Schlüssel verschlüsselte, bzw. signierte Nachricht kann mit Hilfe des öffentlichen Schlüssels wieder entschlüsselt werden. Mit Hilfe des Schlüsselpaars bestehend aus dem öffentlichen und dem privaten Schlüssel kann sich der Inhaber des Schlüsselpaars beispielsweise gegenüber jedem, der das Zertifikat und damit auch den öffentlichen Schlüssel besitzt, authentifizieren sowie eine verschlüsselte Kommunikation durchführen.

Eine Nachricht, die ein Sender mit dem öffentlichen Schlüssel des Empfängers verschlüsselt, kann nur von dem vorgesehenen Empfänger mit dessen privaten Schlüssel entschlüsselt werden, so dass eine verschlüsselte Kommunikation zwischen dem Sender und dem Empfänger möglich ist. Eine Nachricht, die der Sender mit seinem privaten Schlüssel verschlüsselt, kann von jedem beliebigen Empfänger, der den öffentlichen Schlüssel besitzt, entschlüsselt werden, so dass der Sender authentifiziert werden kann. Dabei muss die authentifizierbare Nachricht nicht notwendigerweise zusätzlich nur für einen einzigen Empfänger mit dessen öffentlichen Schlüssel verschlüsselt sein.

Ist der private Schlüssel eines Senders, beispielsweise eines Servers, defekt oder kompromittiert, kann der Empfänger, beispielsweise ein Client, keine vertrauenswürdige Verbindung bzw. Kommunikation zu dem Sender aufbauen und der Sender kann sich nicht mehr gegenüber dem Empfänger authentifizieren. Der Sender kann somit keinen alternativen öffentlichen Schlüssel und kein Zertifikat mehr sicher an den Empfänger übertragen. Eine sichere Kommunikation zwischen dem Sender und dem Empfänger ist ohne einen manuellen Eingriff auf der Seite des Empfängers nicht mehr möglich.

Es sind verschiedene Verfahren und standardisierte Protokolle bekannt, bei denen mit Hilfe eines solchen Schlüsselpaars eine bei Bedarf vertrauliche Kommunikation zwischen jeweils authentifizierbaren Teilnehmern durchgeführt werden kann. Jeder Teilnehmer kann und muss dazu seinen öffentlichen Schlüssel an andere Teilnehmer verteilen. Seinen privaten Schlüssel muss er hingegen geheim halten. Der private Schlüssel kann sowohl zur Verschlüsselung und Entschlüsselung von Nachrichten als auch zur Signierung von Nachrichten und zur Authentifizierung, also zur Sicherstellung der Identität des Teilnehmers, verwendet werden. Die in der Praxis verwendeten Verschlüsselungsprotokolle Transport Layer Security (TLS) oder dessen Vorgänger Secure Sockets Layer (SSL) sind Beispiele für solche standardisierten Protokolle, die häufig zur sicheren Kommunikation zwischen Teilnehmern eines digitalen Netzwerkes eingesetzt werden.

Dabei werden in der Regel softwarebasierte Lösungen und Module verwendet, bei denen der öffentliche Schlüssel und der private Schlüssel des Schlüsselpaars in Form von digitalen Dateien vorliegen. Der private Schlüssel kann somit oftmals ungehindert vervielfältigt werden, so dass es eine wichtige und notwendige Aufgabe eines Besitzers eines solchen Schlüsselpaars ist, den privaten Schüssel vor einem unbefugten Zugriff zu schützen. Allerdings kann der Besitzer auf diese Weise auch eine Sicherungskopie des privaten Schüssels herstellen, um bei einer ungewollten Beschädigung oder einem Verlust des originalen privaten Schlüssels die Sicherungskopie zu verwenden.

Um die Geheimhaltung eines Schlüssels sicherzustellen, werden Computersysteme, insbesondere Server im Internet, in zunehmendem Maße mit sogenannten Hardware-Sicherheitsmodulen (HSM) ausgestattet. Ein Hardware-Sicherheitsmodul ist ein internes oder externes Peripheriegerät, das die sichere Speicherung von Schlüsseln ermöglicht und eine effiziente und sichere Ausführung kryptographischer Operationen erlaubt. Zu diesem Zweck können auch Programmmodule in dem Hardware-Sicherheitsmodul implementiert sein, mit denen beispielsweise eine Verschlüsselung oder Entschlüsselung von Daten mit dem in dem Hardware-Sicherheitsmodul gespeicherten Schlüssel vorgenommen werden kann, ohne dass der Schlüssel aus dem Hardware-Sicherheitsmodul heraus übertragen oder extern genutzt werden muss. Somit kann sichergestellt werden, dass die sicherheitsrelevanten kryptographischen Operationen, die beispielsweise ein Server ausführt, nicht manipuliert oder überwacht werden können. Typischerweise werden deshalb die privaten Schlüssel, die einem Server zugeordnet sind, innerhalb des Hardware-Sicherheitsmoduls gespeichert.

Die privaten Schlüssel sind in den meisten Hardware-Sicherheitsmodulen solchermaßen gespeichert, dass sie nicht unbefugt manipuliert oder kopiert werden können. Wird versucht, die Schlüssel trotzdem auszulesen, so werden diese zerstört. Dieses Verhalten ist gewollt, denn nur so kann sichergestellt werden, dass bei Hackerangriffen oder bei einem physischen Zugriff auf das Hardware-Sicherheitsmodul die geheimen Schlüssel nicht entwendet werden können. Bei einem Ausfall des Hardware-Sicherheitsmoduls ist aber auch der geheime Schlüssel durch den zugehörigen Server nicht mehr verwendbar, da dieser Schlüssel nur einmalig vorhanden ist. Das davon betroffene Schlüsselpaar kann nicht mehr verwendet werden, so dass auch jegliche Kommunikation unmöglich wird, die auf dieses Schlüsselpaar aufbaut. Ein nachträgliches Übertragen eines alternativen Schlüssels bzw. allgemein eines Vertrauensankers auf einen Client, um nach dem Ausfall des ursprünglich vorgesehenen Schlüsselpaars wieder eine gesicherte Kommunikation durchführen zu können, ist ebenfalls nicht mehr möglich, da der Client regelmäßig nur Zugriffe akzeptiert, die auf dem ursprünglich vorgesehenen Schlüsselpaar des Servers beruhen.

Es sind auch Hardware-Sicherheitsmodule bekannt, bei denen die darin gespeicherten Schlüssel üblicherweise weder manipuliert oder ausgelesen und kopiert werden können, bei denen jedoch unter außergewöhnlich hohen Sicherheitsvoraussetzungen ein Zugriff auf einen dort gespeicherten Schlüssel möglich ist. Ein solcher Zugriff ist jedoch ausschließlich besonders vertrauenswürdigen Teilnehmern möglich und mit derart hohen Sicherheitsanforderungen verbunden, dass auch diese Hardware-Sicherheitsmodule als zuverlässig gegenüber unbefugten Manipulationen und Kopieren von darin gespeicherten Schlüsseln angesehen werden. Hardware-Sicherheitsmodule bzw. Speicher mit den vorangehend beschriebenen Eigenschaften werden als nicht auslesefähig bezeichnet.

Dies stellt jedoch auch ein großes Risiko in Client-Server-Systemen dar, in denen der Client nur einen Server und dessen Zertifikat kennt. Der Client erwartet, dass sich der Server nur mit dem dem Client bereits bekannten Zertifikat des Servers authentifiziert. Ist das Hardware-Sicherheitsmodul beschädigt und nicht mehr zu benutzen, so wird die Authentifizierung des Servers aufgrund des fehlenden privaten Schlüssels unmöglich. Der Client muss gegebenenfalls auf einen anderen Server ausweichen, der verfügbar ist, und kann nach einem Austauschen der notwendigen Informationen diesen zweiten Server authentifizieren und eine sichere Kommunikation mit diesem zweiten Server durchführen. Der Wechsel zu einem anderen, bzw. zweiten Server ist mit Aufwand verbunden und erfordert häufig eine Interaktion mit einem Nutzer der Kommunikation. Falls der Client jedoch eine hardwaremäßig vorgegebene Kommunikationseinheit mit einem fest vorgegebenen Zertifikat eines bestimmten Servers aufweist, wäre ein nachträglicher Wechsel auf einen zweiten Server nicht möglich. Eine Konfiguration von vertrauenswürdigen Servern ist bei einem Client regelmäßig gegen unbefugte Modifikationen geschützt, sodass nur ein vertrauenswürdiger Server diese Konfiguration verändern oder aktualisieren kann. Falls aber die Kommunikation mit dem vertrauenswürdigen Server nicht mehr möglich ist, ist auch eine nachträgliche Änderung der Konfiguration des Clients nicht mehr möglich.

Die Aufgabe der vorliegenden Erfindung ist es deshalb, ein Verfahren bereitzustellen, das es einem Client ermöglicht, auch im Falle eines Ausfalls eines Servers bzw. dessen Hardware-Sicherheitsmoduls ohne einen individuellen Benutzereingriff mit einer authentifizierten Gegenstelle zu kommunizieren.

Die Aufgabe wird gelöst durch ein Verfahren zur Herstellung einer Ausfallsicherung in einem Netzwerk umfassend einen Client, einen ersten Server und einen zweiten Server, wobei das Verfahren mindestens die folgenden Schritte umfasst: Einmalige Übermittlung eines Hauptzertifikats, das dem ersten Server zugeordnet ist, und mindestens eines Reservezertifikats, das dem zweiten Server zugeordnet ist, an den Client, Stellung einer Anfrage des Clients an den ersten Server, wobei nach erfolgreicher Anfrage des Clients an den ersten Server sich der erste Server gegenüber dem Client als Inhaber des Hauptzertifikats authentifiziert, und wobei bei nicht erfolgreicher Anfrage des ersten Servers der Client eine Anfrage an den zweiten Server stellt und der zweite Server sich gegenüber dem Client als Inhaber des Reservezertifikats authentifiziert.

Somit kann sich der Client unmittelbar, also ohne einen Benutzereingriff, und ohne einen nachträglichen Austausch von Zertifikaten an den zweiten Server wenden, falls die Anfrage an den ersten Server nicht erfolgreich ist. Eine Anfrage ist als nicht erfolgreich anzusehen, wenn der Server auf eine Anfrage innerhalb eines vorgegebenen Zeitraums nicht oder nicht vollständig antwortet, weil er beispielsweise nicht mehr funktionsfähig ist oder die Verbindung zum Client gestört ist. Eine Anfrage kann ferner dann als nicht erfolgreich angesehen werden, wenn sich der Server nicht erfolgreich gegenüber dem Client authentifiziert oder aus sonstigen Gründen keine sichere Verbindung zwischen Client und Server hergestellt werden kann. Der zweite Server kann sich in einem solchen Fall mittels des Reservezertifikats gegenüber dem Client authentifizieren. Durch die erfindungsgemäße Ausgestaltung des Verfahrens kann ein ungeplanter Wechsel in der Kommunikation des Clients von dem ersten Server zu dem zweiten Server innerhalb kurzer Zeit und vollständig automatisiert durchgeführt werden. Auf diese Weise kann auch die Kommunikation mit einem sogenannten Failover-Cluster aufrechterhalten werden, ohne dass ein privater Schlüssel eines Servers vervielfältigt oder Gruppenzertifikate verwendet werden müssen, um dem Client eine Kommunikation mit dem Failover-Cluster zu ermöglichen.

Das erfindungsgemäße Verfahren eignet sich in besonders vorteilhafter Weise für eine sichere Kommunikation zwischen einem Client und einem Server, die von dem Client aus initiiert bzw. eingeleitet wird, ohne dass der Server vorab eine entsprechende Anfrage an den Client übermitteln muss. Ein derartiger Client kann ein beispielsweise eine mit dem Internet verbundene Gerätekomponente eines bei einem Verbraucher befindlichen Endgeräts sein. Derartige Clients können in der Regel nicht direkt von einem Server aus kontaktiert werden und müssen über einen langen Zeitraum betrieben und genutzt werden, ohne dass ein Server eine Verbindung zu dem Client aufbauen muss. Um die angestrebte Funktionalität des Clients nutzen zu können ist es dagegen zumindest in zeitlichen Abständen erforderlich, dass der betreffende Client eine Verbindung mit einem Server aufbaut und beispielsweise über einen Zeitraum hinweg gesammelte Verbrauchswerte an den Server übermittelt. Es ist ein wesentlicher Vorteil des erfindungsgemäßen Verfahrens, dass bei derartigen Fällen, in denen der Client die Verbindung zu einem Server aufbauen will, der Client im Falle eines Ausfalls des zuerst angefragten Servers die Kommunikation mit einem zweiten Server aufbauen und durchführen kann. Dies ist in gleicher Weise auch dann möglich, wenn das Hauptzertifikat des ersten Servers nicht mehr verwendet werden kann oder darf, weil es beispielsweise kompromittiert wurde und keine sichere Kommunikation zwischen dem Client und dem ersten Server mehr möglich ist.

Durch beidseitige Überprüfungen des Hauptzertifikats und eines Clientzertifikats, die bei einem Verbindungsaufbau zwischen dem Server und dem Client durchgeführt werden, kann sichergestellt werden, dass bereits vor der von dem Client initiierten Übermittlung erster Daten des Clients eine zuverlässige bzw. vertrauenswürdige und geschützte Verbindung des Clients mit dem ersten Server oder mit dem zweiten Server etabliert wird.

Es besteht bei Anwendung des erfindungsgemäßen Verfahrens die vorteilhafte Möglichkeit, Clients wie beispielsweise Smart Meter Gateways eine zuverlässige, geschützte und jederzeit mögliche Kommunikation mit einem Failover-Cluster oder einem Switchover-Cluster zu ermöglichen, sodass der Client über einen langen Zeitraum ohne jeglichen aktiven Eingriff von außen betrieben und genutzt werden kann. Insbesondere kann das Risiko vermieden werden, dass bei einem Ausfall des ersten Servers oder dessen Hauptzertifikats alle Clients, welche für eine sichere Kommunikation mit diesem ersten Server eingerichtet sind, keine Verbindung mehr mit dem ersten Server aufnehmen können und ausgetauscht werden müssen.

Wenn der Wechsel von dem Hauptzertifikat des ersten Servers zu dem Reservezertifikat des zweiten Servers nicht von dem Client ausgehen kann, sondern abweichend von dem erfindungsgemäßen Verfahren ausschließlich von dem Server initiiert werden kann, müsste der Client über eine nicht vertrauenswürdige Verbindung zu einem Verbindungswechsel aufgefordert werden. Die Initiierung des Wechsels über eine nicht vertrauenswürdige, ungesicherte Verbindung stellt ein hohes Sicherheitsrisiko dar und kann für Cyberangriffe genutzt werden. Zudem werden in der Regel nicht vertrauenswürdige Verbindungen von Firewalls oder entsprechenden Sicherungsmaßnahmen blockiert, so dass der Server den Client nicht auf direktem Wege erreichen kann.

Auch muss der Server innerhalb kurzer Zeit mit allen Clients korrespondieren und den Wechsel veranlassen, was in Abhängigkeit von der Anzahl der diesem Server zugeordneten Clients zumindest kurzzeitig zu einer enorm hohen Belastung und Auslastung des Servers führen wird, auch wenn die einzelnen Clients erst zu einem viel späteren Zeitpunkt die Kommunikation mit dem Server aufnehmen und Daten an den Server übermitteln sollen. Indem den Clients die Möglichkeit gegeben wird, selbsttätig einen Wechsel von dem Hauptzertifikat zu einem Reservezertifikat vorzunehmen und dann eine geschützte Kommunikation mit dem zweiten Server durchzuführen, kann die Aktualisierung der Clients bei dem zweiten Server über einen wesentlich längeren Zeitraum verteilt werden.

Das verwendete Netzwerk kann ein gängiges digitales Netzwerk zur Verbindung von Computern und sonstigen Rechner- und Kommunikationsvorrichtungen sein. Es kann beispielsweise zur Übertragung von Daten über Energieversorgungsleitungen eingerichtet sein.

Gemäß einer besonders vorteilhaften Ausgestaltung des Erfindungsgedankens enthält der erste Server ein Hardware-Sicherheitsmodul, in dem ein dem Hauptzertifikat zugeordneter privater Schlüssel nicht auslesefähig gespeichert ist. Der private Schlüssel ist dabei solchermaßen in dem Hardware-Sicherheitsmodul gespeichert sein, dass ein unbefugter Versuch, auf die Daten zuzugreifen, eine unwiederbringliche Löschung des Hardware-Sicherheitsmoduls bzw. der darin gespeicherten Daten nach sich zieht. Mit dem Hardware-Sicherheitsmodul können alle zulässigen Anwendungen durchgeführt werden, die den privaten Schlüssel benötigen. Ein unbefugtes Auslesen oder Kopieren des privaten Schlüssels oder eine Manipulation des privaten Schlüssels werden durch das Hardware-Sicherheitsmodul nach aktuellen Maßstäben wirksam verhindert, weshalb der private Schlüssel in dem Hardware-Sicherheitsmodul als nicht auslesefähig bezeichnet wird. Mit solchen Hardware-Sicherheitsmodulen kann eine besonders sichere Kommunikation zwischen verschiedenen Kommunikationsteilnehmern gewährleistet werden. Erfindungsgemäß kann auch der zweite Server ein Hardware-Sicherheitsmodul aufweisen, in dem ein dem Reservezertifikat zugeordneter privater Schlüssel nicht auslesefähig gespeichert ist. Das diesem privaten Schlüssel zugeordnete Reservezertifikat kann der zweite Server dem ersten Server oder einer übergeordneten Management-Einrichtung übermitteln, um gegebenenfalls eine zentrale Übertragung des Reservezertifikats an den Client zu ermöglichen und die Kommunikation mit dem Client zu vereinfachen.

Der private Schlüssel wird in Kombination mit dem zugeordneten öffentlichen Schlüssel für die Erzeugung des Hauptzertifikats verwendet. Falls das Hardware-Sicherheitsmodul beschädigt wird oder auf andere Weise funktionsunfähig wird, kann das Hauptzertifikat nicht mehr verwendet werden, so dass keine Kommunikation mehr zwischen dem Client und dem betreffenden Server möglich ist.

Um auch den Client möglichst manipulationssicher auszugestalten kann der Client so eingerichtet sein, dass der Client einen zugriffsgeschützten Speicher für das Hauptzertifikat und für das Reservezertifikat enthält. Der Zugriffsschutz kann dabei beispielsweise derart ausgestaltet sein, dass nur ein Benutzer, dessen Zertifikat dem Client bereits vor einem ersten Kontakt mit dem Benutzer zur Verfügung steht, auf den zugriffsgeschützten Speicher zugreifen und in diesem zugriffsgeschützten Speicher bereits gespeicherte Zertifikate ersetzen, bzw. neue Zertifikate hinzufügen kann. Der Zugriffsschutz kann einen Zugriff auch auf den ersten Server und den zweiten Server beschränken, deren Hauptzertifikat bzw. Reservezertifikat bereits in dem zugriffsgeschützten Speicher hinterlegt sind.

Es ist ebenfalls möglich, dass der Client einen nur einmal beschreibbaren Speicher für das Hauptzertifikat und für das Reservezertifikat enthält. Dabei bedeutet nur einmal beschreibbarer Speicher, dass der Speicher während des üblichen Betriebs des Clients nicht verändert, sondern nur ausgelesen werden kann. Durch geeignete Löschverfahren könnte der nur einmal beschreibbare Speicher gelöscht und neu beschrieben werden, was jedoch nicht während des üblichen Betriebs des Clients bzw. ausschließlich mit Softwareprogrammen möglich ist. Nach der Inbetriebnahme des Clients und einer ersten Kommunikation mit dem Client über das Netzwerk können von einem autorisierten Teilnehmer das Hauptzertifikat und das Reservezertifikat in dem nur einmal beschreibbaren Speicher hinterlegt werden. Eine nachträgliche Veränderung bestehender Zertifikate wird dadurch unmöglich. Mit einem derartigen Client kann eine besonders sichere Kommunikation mit einem Server mit einem Hardware-Sicherheitsmodul durchgeführt werden. Allerdings könnte es zweckmäßig sein, zu einem späteren Zeitpunkt ein weiteres Reservezertifikat nachträglich hinzuzufügen, so dass beispielsweise nach dem Ausfall des ersten Servers das bis dahin als Reservezertifikat zukünftig wie ein neues Hauptzertifikat genutzt wird und ein weiteres Reservezertifikat dem nur einmal beschreibbaren Speicher hinzugefügt wird, um die angestrebte Ausfallsicherheit weiterhin gewährleisten zu können. Für einen nur einmal beschreibbaren Speicher kann beispielsweise ein löschbarer und programmierbarer Nur-Lese-Speicher (EPROM) oder ein einmal programmierbarer Nur-Lese-Speicher (PROM) eingesetzt werden, dessen darin gespeicherte Information während eines üblichen Betriebs nicht gelöscht oder verändert werden kann.

Erfindungsgemäß kann in einer besonders vorteilhaften Weise auch vorgesehen sein, dass der Client einen nicht beschreibbaren Speicher aufweist, in welchem das Hauptzertifikat und das Reservezertifikat gespeichert sind.

Ein derartiger Speicher kann beispielsweise ein Nur-Lese-Speicher (ROM) oder ein Festwertspeicher sein. Das Hauptzertifikat und das Reservezertifikat müssen bei dem nicht beschreibbaren Speicher bereits bei dessen Herstellung durch den Hersteller in dem nicht beschreibbaren Speicher hinterlegt und abgespeichert werden. Eine nachträgliche Veränderung des nicht beschreibbaren Speichers ist unmöglich, so dass mit diesem Ausführungsbeispiel eine besonders hohe Sicherheit gewährleistet werden kann, da eine nachträgliche unbefugte Manipulation der Zertifikate grundsätzlich ausgeschlossen ist.

Es ist ebenfalls möglich und im Hinblick auf eine möglichst sichere Kommunikation zwischen dem Client und dem ersten bzw. zweiten Server erfindungsgemäß vorgesehen, dass der Client ein Hardware-Sicherheitsmodul aufweist, in dem ein einem Clientzertifikat zugeordneter privater Schlüssel des Clients nicht auslesefähig gespeichert ist. Auf diese Weise kann jeder Client individualisiert und geschützt sein. Eine unbefugte Übernahme der Identität eines Clients, indem dessen privater Schlüssel kopiert oder unbefugt übertragen wird, kann dadurch ausgeschlossen werden. Es sind Anwendungsfälle aus der Praxis bekannt, bei denen ein Client nach einer Beschädigung des Hardware-Sicherheitsmoduls unbrauchbar wird und durch einen neuen Client ersetzt werden muss, dieser Austausch jedoch in Kauf genommen wird, um eine besonders sichere Kommunikation zwischen dem Client und dem Server gewährleisten zu können.

Sollte das Hardware-Sicherheitsmodul des ersten Servers unbenutzbar werden und eine auf dem Hauptzertifikat basierende Kommunikation zwischen dem Client und dem ersten Server unmöglich werden, wäre der betreffende Client zunächst nicht mehr funktionsfähig, da keine sichere Kommunikation mit dem ersten Server erfolgen kann. Falls jedoch das erfindungsgemäße Verfahren angewendet wird und in dem Client sowohl das Hauptzertifikat als auch mindestens ein Reservezertifikat gespeichert wird, bevor der Client ausgeliefert oder erstmals in Benutzung genommen wird, kann bei einem Ausfall des ersten Servers mit Hilfe des bereits in dem Client gespeicherten Reservezertifikats eine sichere Verbindung zu dem zweiten Server aufgebaut und eine sichere Kommunikation mit dem zweiten Server durchgeführt werden.

Weiterhin ist erfindungsgemäß vorgesehen, dass in dem Client, in dem ersten Server, in dem zweiten Server und/oder in mindestens einem weiteren Server alle zur Authentifizierung als Inhaber des Zertifikats notwendigen Daten nicht auslesefähig gespeichert sind. Als notwendige Daten, die zur Authentifizierung als Inhaber eines Zertifikats benötigt werden, können dabei private Schlüssel angesehen werden. Es kann sich aber auch um andere Daten wie beispielsweise Zertifikate handeln, die eine Authentifizierung bzw. eine sichere Kommunikation erlauben.

Vorzugsweise wird nach erfolgreicher Authentifizierung des ersten Servers gegenüber dem Client eine gesicherte Verbindung zwischen dem ersten Server und dem Client aufgebaut. Die Verbindung kann dabei dadurch gesichert sein, dass sie verschlüsselt ist. Durch eine Verschlüsselung ist sichergestellt, dass Dritte, die übertragene Daten abhören, deren Inhalt nicht einsehen können. Ferner kann die Verbindung solchermaßen abgesichert sein, dass auch die Integrität der übermittelten Daten sichergestellt wird. Dadurch ist es einem Dritten unmöglich, die übertragenen Daten zu manipulieren. Sollte eine gesicherte Verbindung zu dem ersten Server nicht möglich sein, wird eine gesicherte Verbindung zwischen dem zweiten Server und dem Client nach erfolgreicher Authentifizierung des zweiten Servers gegenüber dem Client zwischen dem zweiten Server und dem Client aufgebaut.

Erfindungsgemäß kann die Übermittlung des Hauptzertifikats an den Client erfolgen, bevor ein Anschluss des Clients an das Netzwerk erfolgt. Dies betrifft insbesondere solche Clients, die bei privaten Endverbrauchern eingesetzt werden, aber nicht durch diese gewartet werden können oder sollen. Bei dem Client kann es sich dabei beispielsweise um ein System handeln, das nur einmal mit Daten beschreibbar ist. Somit kann eine Manipulation des Clients durch den Endverbraucher vermieden werden. Durch die Einrichtung des Clients durch den Auslieferer kann dieser sicherstellen, dass tatsächlich die korrekten Zertifikate auf den Client aufgespielt wurden. Neben einem Hauptzertifikat kann auch ein mindestens ein Reservezertifikat an den Client übermittelt werden, bevor ein Anschluss des Clients an das Netzwerk erfolgt. Das übermittelte Haupt- oder Reservezertifikat enthält vorzugsweise Informationen, mittels deren der Client feststellen kann, ob eine Gegenstelle der tatsächliche Inhaber des Haupt- oder Reservezertifikats ist.

Gemäß einer weiteren Ausführungsform der Erfindung umfasst die Übermittlung des Reservezertifikats an den Client zumindest die folgenden Schritte: Stellung einer Anfrage des Clients an den ersten Server, Authentifizierung des ersten Servers als Inhaber des Hauptzertifikats gegenüber dem Client und Übermittlung mindestens eines Reservezertifikats vom ersten Server an den Client. Folglich übermittelt der erste Server dem Client ein Reservezertifikat, das einem zweiten Server zugeordnet ist. Der erste Server kann das Reservezertifikat entweder bereits vorhalten oder aber erst dann beschaffen, wenn der Client ihn kontaktiert. Die Übermittlung eines entsprechenden Zertifikats kann bei einer ersten Anfrage des Clients, aber auch bei einer späteren Anfrage des Clients an den ersten Server durchgeführt werden. Der erste Server kann mehrere Reservezertifikate von mehreren zweiten Servern an den Client übermitteln, sodass dem Client mehrere Gegenstellen verfügbar sind, falls der erste Server ausfällt. Es ist grundsätzlich auch möglich, dass in dem Client ein weiteres Administrationszertifikat zugriffsgeschützt gespeichert ist und vor der ersten Inbetriebnahme des Clients eine Kommunikation mit einem Administrationsserver erfolgt, der dazu vorgesehen und eingerichtet ist, dem Client vor dessen Inbetriebnahme das Hauptzertifikat und das Reservezertifikat zu übermitteln.

Falls der erste Server ein Reservezertifikat erzeugt, so kann er dieses dem zweiten Server bereitstellen und gegebenenfalls bei einer ersten Kommunikation mit dem Client an den Client übermitteln. Es ist ebenfalls möglich, dass ein zentraler Administrationsserver das Hauptzertifikat und das Reservezertifikat verwaltet und vor einer ersten Inbetriebnahme oder gegebenenfalls nachträglich an den Client übermittelt. Das Hauptzertifikat und das Reservezertifikat können auch in einer zentralen Konfigurationsdatenbank hinterlegt sein, auf welche der erste Server und gegebenenfalls der zweite Server sowie der Administrationsserver Zugriff haben.

Es ist gemäß einer Ausgestaltung des Erfindungsgedankens vorgesehen, dass das Verfahren zusätzlich die folgenden Schritte umfasst: Übermittlung eines Clientzertifikats an den ersten Server und/oder den zweiten Server und, nach erfolgreicher Anfrage des Clients an den ersten bzw. an den zweiten Server, Authentifizierung des Clients gegenüber dem ersten bzw. dem zweiten Server als Inhaber des Clientzertifikats. Dem ersten Server und/oder dem zweiten Server wird folglich ein Clientzertifikat übermittelt, mit dem der betreffende Server den Client eindeutig identifizieren kann. Diese Übermittlung muss lediglich einmalig erfolgen. Das Clientzertifikat kann dem ersten bzw. dem zweiten Server beispielsweise durch eine vertrauenswürdige Stelle übermittelt werden oder vor Inbetriebnahme der Server auf mindestens einem der Server hinterlegt werden.

Bei einer Anfrage des Clients an den ersten bzw. den zweiten Server authentifiziert sich der Client gegenüber dem ersten bzw. dem zweiten Server. Die Authentifizierung erfolgt dabei mittels des dem Client zugeordneten Zertifikats. Der Schritt der Authentifizierung des Clients gegenüber dem ersten bzw. dem zweiten Server kann dabei vor und/oder nach einer Authentifizierung des ersten bzw. des zweiten Servers gegenüber dem Client stattfinden.

Das Clientzertifikat kann dem Client durch einen Server aus einer Public-Key-Infrastruktur ausgestellt werden. Als Public-Key-Infrastruktur wird hierbei ein Netzwerk aus Kommunikationsteilnehmern beschrieben, die sich gegeneinander mittels öffentlichen und privaten Schlüsseln authentifizieren. Hierbei kann einzelnen Servern die Rolle zukommen, Zertifikate auszustellen. Diese Server entsprechen sogenannten Zertifizierungsstellen und müssen als besonders vertrauenswürdig angesehen werden.

Das Clientzertifikat kann dem Client auch durch den ersten Server ausgestellt werden. Dazu erzeugt der erste Server ein entsprechendes Zertifikat und ermittelt dieses an den Client. Das Zertifikat kann der erste Server bei einer ersten Anfrage des Clients an den ersten Server erzeugen, aber auch bei einer späteren Anfrage. Es ist vorteilhaft, wenn dem Client das Clientzertifikat durch den ersten Server erst ausgestellt wird, nachdem sich der erste Server gegenüber dem Client authentifiziert hat. Nur in diesem Fall kann der Client sichergehen, dass ihm ein korrektes Clientzertifikat übermittelt wurde. Das Clientzertifikat kann dem Client auch vor Inbetriebnahme, zumindest aber vor Anschluss des Clients an das Netzwerk, übermittelt werden.

Gemäß einer möglichen Ausführungsform kann nach erfolgreicher Authentifizierung des zweiten Servers gegenüber dem Client mindestens ein weiteres Reservezertifikat, das einem weiteren Server zugeordnet ist, von dem zweiten Server an den Client übertragen werden. Hierdurch kann sichergestellt werden, dass dem Client auch für den Fall, dass der zweite Server ausfällt, weitere Server bekannt sind, und dass der Client auch entsprechende Zertifikate besitzt, sodass eine Authentifizierung der weiteren Server gegenüber dem Client möglich ist. Eine solche Bereitstellung weiterer Zertifikate an den Client durch weitere Server an den Client kann auch iterativ erfolgen. Dies bedeutet, dass grundsätzlich jeder Server, bei dem der Client eine Anfrage stellt, dem Client Reservezertifikate übermitteln kann, mit denen sich weitere Server gegenüber dem Client authentifizieren können.

Vorzugsweise umfasst der Schritt der Authentifizierung die Verwendung eines dem Zertifikat zugeordneten privaten Schlüssels durch den Inhaber des Zertifikats sowie einen Überprüfungsschritt mittels eines dem Zertifikat zugehörigen öffentlichen Schlüssels. Es handelt sich dabei um ein Authentifizierungsverfahren, das ein Verfahren der asymmetrischen Kryptographie anwendet. Vorzugsweise umfasst der Schritt der Authentifizierung ein Challenge-Response-Verfahren. Der Vorgang der Authentifizierung kann jedoch auch mittels anderer Verfahren durchgeführt werden. So können beispielsweise zur Authentifizierung ein Passwort oder eine PIN übermittelt werden.

Es ist erfindungsgemäß vorgesehen, dass der Schritt der Authentifizierung die Verwendung eines dem Zertifikat zugeordneten privaten Schlüssels durch den Inhaber des Zertifikats sowie einen Überprüfungsschritt mittels eines dem Zertifikat zugehörigen öffentlichen Schlüssels umfasst. Typischerweise sind dem Zertifikat ein öffentlicher und ein privater Schlüssel zugeordnet, wobei allerdings nur der Inhaber des Zertifikats auch den privaten Schlüssel kennt. Eine Gegenstelle erhält durch das Zertifikat diverse Informationen zum Eigentümer des Zertifikats sowie einen öffentlichen Schlüssel, sodass sich der Inhaber des Zertifikats mittels seines privaten Schlüssels gegenüber der Gegenstelle authentifizieren kann.

Gemäß einer besonders bevorzugten Ausführungsform handelt es sich bei den Zertifikaten um Public-Key-Zertifikat nach dem Standard X.509. Dieses enthält unter anderem Informationen zum Aussteller, zur Gültigkeit, zum Zertifikatinhaber, zum öffentlichen Schlüssel des Zertifikatinhabers, eine Algorithmen-ID und eine Seriennummer. Zusätzlich enthält es eine Zertifikatsignatur, sodass die Identität des Ausstellers des Zertifikats geprüft werden kann.

Die die Authentifizierung und die Sicherung von Verbindungen kann durch das TLS-Protokoll implementiert sein. TLS (Transport Layer Security) ist ein Verschlüsselungsprotokoll, das es erlaubt, Daten sicher in Computernetzwerken zu übertragen. Im TCP/IP-Protokollstapel wird es der Transportschicht zugerechnet. Gemäß TLS findet eine Authentifizierung auf Basis eines X.509-Zertifikats statt, darüber hinaus erfolgt die Kommunikation nach erfolgreicher Authentifizierung und Berechnung eines gemeinsamen Schlüssels auf Basis symmetrischer Verschlüsselung. TLS wird beispielsweise beim https-Protokoll zur sicheren Datenübertragung im World Wide Web eingesetzt. Es bildet aber auch die Basis vieler weiterer sicherer Übertragungsprotokolle, die in Computernetzwerken eingesetzt werden.

Gemäß einer Ausgestaltung des Erfindungsgedankens ist vorgesehen, dass bei dem Einsatz des erfindungsgemäßen Verfahrens der Client als Smart Meter Gateway ausgebildet ist und der erste Server sowie der zweite Server als Gateway-Administrator-Server und/oder Externer-Marktteilnehmer-Server ausgebildet sind. Als Smart Meter Gateway wird beispielsweise ein Gerät bezeichnet, das Stromverbrauchswerte einer wirtschaftlichen Einheit, zum Beispiel eines Haushalts, sammelt und an externe Marktteilnehmer weiterleitet. Dazu sammelt das Smart Meter Gateway Verbrauchsdaten beispielsweise aus einem lokalen Netzwerk, in dem sich einzelne Verbraucher befinden. Das Smart Meter Gateway kann zusätzliche Daten wie beispielsweise Wetterdaten sammeln, optional aggregieren und weiterleiten. Der erste Server und der zweite Server können Server eines externen Marktteilnehmers sein. Ein solcher Marktteilnehmer kann beispielsweise ein Stromlieferant sein. Der erste Server und der zweite Server können ferner der Server eines Gateway Administrators sein. Dieser ist dazu berechtigt, am Smart Meter Gateway Kontrollen und/oder Änderungen vorzunehmen. Die Kommunikation zwischen dem Smart Meter Gateway und seinen Gegenstellen kann in vorteilhafter Weise mittels Powerline Communication, also über die Energienetze selbst erfolgen.

Eine mögliche Ausführungsform der Erfindung ist in der Zeichnung dargestellt. Dabei zeigt:
Fig. 1 ein schematisches Organisationsdiagramm eines erfindungsgemäßen Systems von einem Client und zwei Servern in einem Netzwerk,
Fig. 2 ein Ablaufdiagramm einer beispielhaften Ausgestaltung des erfindungsgemäßen Verfahrens, und
Fig. 3 ein schematisches Organisationsdiagramm einer weiteren Ausgestaltung des erfindungsgemäßen Systems von einem Client und zwei Servern in einem Netzwerk.

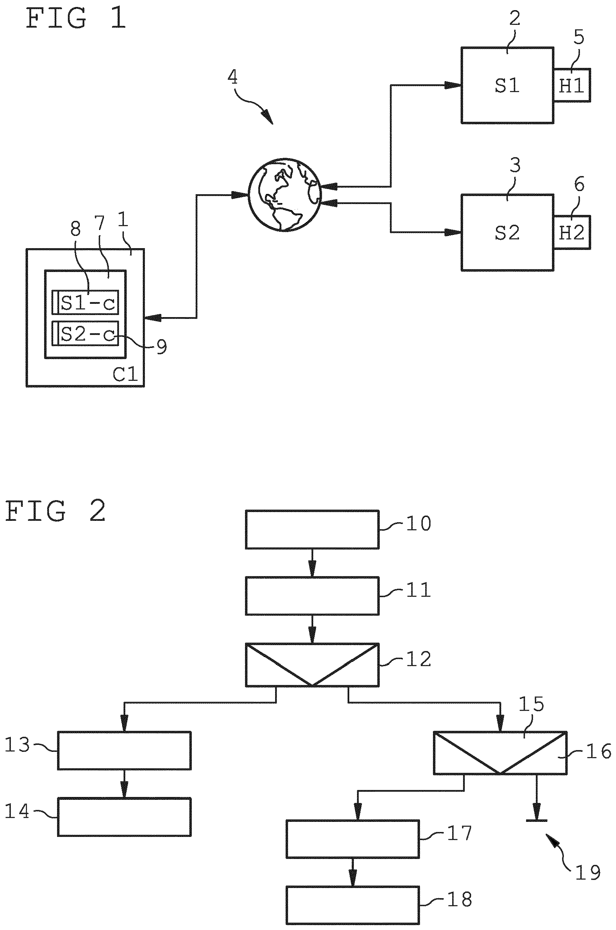

Fig. 1 zeigt einen als C1 bezeichneten Client 1 und zwei in der Figur als S1 und S2 bezeichnete Server 2, 3, die über ein digitales Netzwerk 4 miteinander verbunden sind und miteinander kommunizieren können. Der erste Server 2 weist ein als H1 bezeichnetes erstes Hardware-Sicherheitsmodul 5 und der zweite Server 3 ein als H2 bezeichnetes zweites Hardware-Sicherheitsmodul 6 auf. In den Hardware-Sicherheitsmodulen 5, 6 ist jeweils ein privater Schlüssel des betreffenden Servers 2, 3 manipulationssicher gespeichert. Der Client 1 weist einen geschützten Speicher 7 auf, in dem ein Hauptzertifikat 8, das in der Figur 1 mit S1-c gekennzeichnet ist, und ein Reservezertifikat 9, das in der Figur 1 mit S2-c bezeichnet ist, gespeichert sind. Der geschützte Speicher 7 kann nach einem einmaligen Beschreiben bzw. dem Abspeichern des Hauptzertifikats 8 und des Reservezertifikats 9 nachträglich nicht mehr verändert werden.

Der Client 1 kann unter Verwendung des Hauptzertifikats 8 eine geschützte Verbindung mit dem ersten Server 2 aufbauen. Falls es dem Client 1 nicht möglich ist, innerhalb einer vorgegebenen Zeitspanne eine Verbindung mit dem ersten Server 2 aufzubauen, so versucht er automatisiert eine Verbindung mit dem zweiten Server 3 aufzubauen, wofür das Reservezertifikat 9 verwendet wird. Der Client 1 kann beispielsweise als Smart Meter Gateway ausgestaltet sein. Das Smart Meter Gateway sammelt Stromverbrauchswerte einer wirtschaftlichen Einheit, zum Beispiel eines Haushalts, und leitet diese an externe Marktteilnehmer weiter. Zu diesem Zweck ist das Smart Meter Gateway mit lokalen Verbrauchern verbunden. Ferner ist das Smart Meter Gateway mit lokalen Sensoren verbunden, die beispielsweise Wetterdaten messen. Eine entsprechende Verbindung kann als LAN- oder WLAN-Verbindung ausgeführt sein. Wird durch die wirtschaftliche Einheit Strom bezogen, so setzt sich das Smart Meter Gateway zu Abrechnungszwecken sowie zum Austausch weiterer Informationen mit externen Messstellen-Servern, in dem gezeigten Ausführungsbeispiel mit dem ersten Server 2, von einer externen Messstelle in Verbindung. Falls der erste Server 2 ausfallen sollte, kann das Smart Meter Gateway weiter betrieben und genutzt werden, und eine sichere Kommunikation mit dem zweiten Server 3 derselben Messstelle oder einer alternativ nutzbaren Messstelle durchgeführt werden.

Fig. 2 zeigt ein schematisches Ablaufdiagramm zum erfindungsgemäßen Verfahren, wobei der soeben beschrieben Ablauf näher erläutert wird. In einem ersten Schritt 10 werden das Hauptzertifikat 8, das dem ersten Server 2 zugeordnet ist, und das Reservezertifikat 9, das dem zweiten Server 4 zugeordnet ist, an den Client 1 übermittelt. Dies kann bereits herstellerseitig bei der Herstellung des Clients 1, vor einem ersten Anschluss des Clients 1 an das Netzwerk 4 oder während einer ersten Kommunikation mit einem vertrauenswürdigen Kommunikationspartner erfolgen.

In einem zweiten Schritt 11 erfolgt eine Anfrage vom Client 1 an den ersten Server 2. Es erfolgt eine erste Auswertung 12, ob die Anfrage vom Client 1 an den ersten Server 2 erfolgreich war.

War die Anfrage erfolgreich, so wird in einem nachfolgenden Schritt 13 eine gesicherte Verbindung zwischen dem Client 1 und dem ersten Server 2 aufgebaut, um anschließend eine sichere Kommunikation 14 zwischen dem Client 1 und dem ersten Server 2 durchzuführen.

War die Anfrage an den ersten Server 2 nicht erfolgreich, so wird in einem nachfolgenden Schritt 15 vom Client 1 eine Anfrage an den zweiten Server 3 gestellt. Es erfolgt eine zweite Auswertung 16, ob die Anfrage vom Client 1 an den zweiten Server 3 erfolgreich war. War die Anfrage erfolgreich, so wird in einem nachfolgenden Schritt 17 eine gesicherte Verbindung zwischen dem Client 1 und dem zweiten Server 3 aufgebaut, um anschließend eine sichere Kommunikation 18 zwischen dem Client 1 und dem zweiten Server 3 durchzuführen. Ist auch die Anfrage des ersten Clients 1 an den zweiten Server 3 nicht erfolgreich, so muss ein Abbruch 19 des Verfahrens erfolgen.

Der Client 1 kann durch einen Gateway-Administrator-Server gewartet werden. Diese Server sollten nach Möglichkeit jeweils redundant mit einem ersten Server 2, einem zweiten Server 3 und gegebenenfalls mit einem weiteren Server ausgestattet sein, um die Ausfallsicherheit des Systems zu erhöhen.

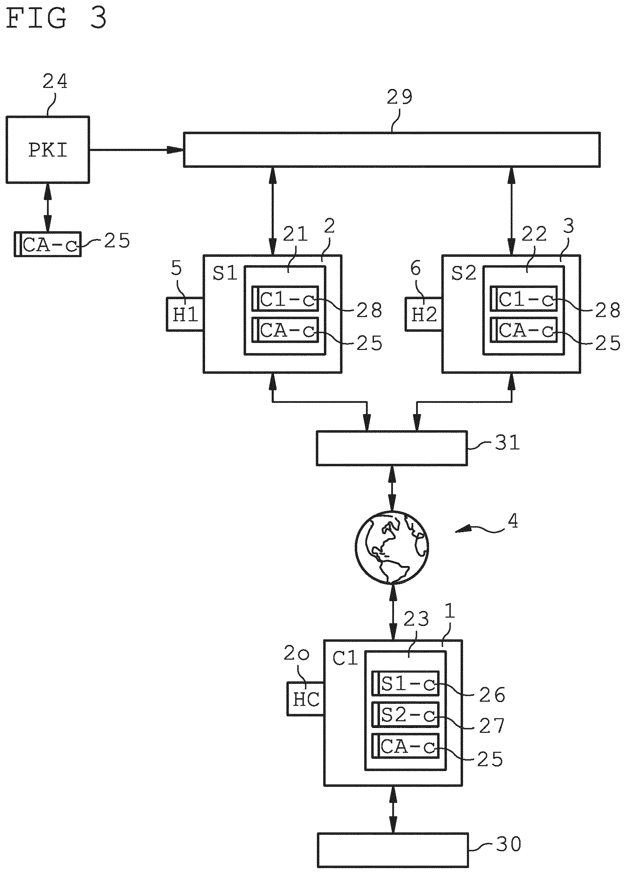

In Fig. 3 ist exemplarisch und schematisch ein abweichend zu Fig. 1 ausgestaltetes erfindungsgemäßes System mit einem mit "S1" bezeichneten ersten Server 2 und einem mit "S2" bezeichneten zweiten Server 3 sowie mit einem als "C1" bezeichneten Client 1 dargestellt. Der erste Server 2 und der zweite Server 3 weisen jeweils ein Hardware-Sicherheitsmodul 5, 6 auf, in denen jeweils der private Schlüssel des betreffenden Servers 2, 3 manipulations- und kopiersicher gespeichert ist. Auch der Client 1 weist ein in Fig. 3 als "HC" bezeichnetes Hardware-Sicherheitsmodul 20 auf, in welchem der private Schlüssel des Clients 1 gespeichert ist. Die beiden Server 2, 3 und der Client 1 weisen jeweils einen zugriffsgeschützten und in vorteilhafter Weise nur einmal oder nicht beschreibbaren Speicher 21, 22, 23 auf, in dem Zertifikate gespeichert sein können. Eine vertrauenswürdige Certification Authority 24, ein als "PKI" bezeichnetes System, welches digitale Zertifikate ausstellen kann, erzeugt nicht nur ein eigenes Zertifikat 25, das in dem in Fig. 3 gezeigten Ausführungsbeispiel mit "CA-c" bezeichnet ist, sondern auch für jeden Server 2, 3 und den Client 1 jeweils ein zugeordnetes Zertifikat, nämlich das Hauptzertifikat "S1-c" 26 für den ersten Server 2, das Reservezertifikat "S2-c" 27 für den zweiten Servern 3 und das Clientzertifikat "C1-c" 28 für den Client 1.

In dem ersten Server 2 und dem zweiten Server 3 wird jeweils in einem geschützten Speicher 21, 22 des ersten Servers 2 und des zweiten Servers 3 das Clientzertifikat "C1-c" 28 und das Zertifikat "CA-c" 25 der Certification Authority "PKI" 24 gespeichert, sowie gegebenenfalls auch die weiteren Zertifikate der übergeordneten Instanzen der CA-Hierarchie bis zu dem Zertifikat "Root-CA-c" der obersten Instanz "Root". Vor der ersten Inbetriebnahme werden in dem Client 1 in einem geschützten Speicher 23 des Clients 1 das Hauptzertifikat "S1-c" 26, das Reservezertifikat "S2-c" 27 und das Zertifikat "CA-c" 25 der Certification Authority "PKI" 24 gespeichert.

Der erste Server 2 und der zweite Server 3 sind Bestandteil einer gemeinsamen Server-Applikation 29, die wahlweise auf dem ersten Server 2 oder auf dem zweiten Server 3 ausgeführt werden kann. Eine von einer Client-Applikation 30 ausgelöste Anfrage des Client 1 an die Server-Applikation 29 wird über das Netzwerk 4 an eine zentrale Eingangseinrichtung 31 geleitet, wobei die zentrale Eingangseinrichtung 31 mit dem ersten Server 2 und mit dem zweiten Server 3 in Verbindung steht und beispielsweise eine Firewall oder ein Load-Balancer sein kann. Die Anfrage des Clients 1 wird zunächst mit dem Hauptzertifikat "S1-c" 26 an den ersten Server 2 weitergeleitet. Sollte der erste Server 2 nicht antworten, weil das Hardware-Sicherheitsmodul 5 des ersten Servers unbrauchbar geworden ist, ist der Client 1 bereits in Besitz des Reservezertifikats "S2-c" 27 des zweiten Servers 3 und kann umgehend eine zweite Anfrage an den zweiten Server 3 richten und mit diesem zweiten Server 3 eine geschützte Kommunikation durchführen. Der Client 1 kann bei Bedarf auch eine gezielte Anfrage an den ersten Server 2 oder an den zweiten Server 3 richten, dessen Hauptzertifikat 26 bzw. Reservezertifikat 27 dem Client 1 vorliegen und bekannt sind. Die jeweiligen Netzwerk-Adressen des ersten Servers 2 und des zweiten Servers 3 können und sollten vorab in dem Client 1 hinterlegt und abrufbar gespeichert sein.

Durch die Hinterlegung des privaten Schlüssels des Clients 1 in dessen Hardware-Sicherheitsmodul 20 kann sich nicht nur der Client 1 gegenüber den beiden Servers 2, 3 authentifizieren, sondern durch die Hinterlegung des Clientzertifikats 28 auf den beiden Servern 2, 3 können diese jeweils dem Client 1 vertrauen und dessen Anfrage autorisieren.

## Patentansprüche

1. Verfahren zur Herstellung einer Ausfallsicherung in einem Netzwerk umfassend einen Client (1) und einen ersten Server (2) wobei das Verfahren mindestens die folgenden Schritte umfasst:
Einmalige Übermittlung eines Hauptzertifikats (8, 26), das dem ersten Server (2) zugeordnet ist, und mindestens eines Reservezertifikats (9, 27) an den Client (1), und Stellung einer Anfrage des Clients (1) an den ersten Server (2),
wobei nach erfolgreicher Anfrage des Clients (1) an den ersten Server (2) sich der erste Server (2) gegenüber dem Client (1) als Inhaber des Hauptzertifikats (8, 26) authentifiziert, **dadurch gekennzeichnet, dass** das Netzwerk einen zweiten Server (3) umfasst, wobei das Reservezertifikat (9, 27) dem zweiten Server (3) zugeordnet ist, dass nach einer nicht erfolgreichen Anfrage des Clients (1) an den ersten Server (2) der Client (1) eine Anfrage an den zweiten Server (3) stellt und der zweite Server (3) sich gegenüber dem Client (1) als Inhaber des Reservezertifikats (9, 27) authentifiziert, sodass sich der Client (1) unmittelbar ohne einen Benutzereingriff und ohne einen nachträglichen Austausch von Zertifikaten (8, 9, 26, 27) an den zweiten Server (3) wenden kann, falls die Anfrage an den ersten Server (2) nicht erfolgreich ist,
dass der erste Server (2) und/oder der zweite Server (3) jeweils ein Hardware-Sicherheitsmodul (5, 6) enthält, in dem ein dem Hauptzertifikat (8, 26) bzw. ein dem Reservezertifikat (9, 27) zugeordneter privater Schlüssel des ersten bzw. des zweiten Servers (2, 3) nicht auslesefähig gespeichert ist, dass nach erfolgreicher Authentifizierung gegenüber dem Client (1) durch den ersten Server (2) beziehungsweise den zweiten Server (3) eine gesicherte Verbindung zwischen dem Client (1) und dem ersten Server (2) beziehungsweise dem zweiten Server (3) zur Übertragung von Nutzdaten aufgebaut wird, und dass die Übermittlung des Hauptzertifikats (8, 26) und des mindestens einen Reservezertifikats (9, 27) vor einem Anschluss des Clients (1) an das Netzwerk (4) erfolgt.

2. Verfahren nach Anspruch 1, **dadurch gekennzeichnet, dass** der Client (1) einen zugriffsgeschützten Speicher (7, 23) oder einen nur einmal beschreibbaren Speicher (7, 23) oder einen nicht beschreibbaren Speicher (7, 23) aufweist, in welchem das Hauptzertifikat (8, 26) und das Reservezertifikat (9, 27) gespeichert sind.

3. Verfahren nach einem der vorhergehenden Ansprüche, **dadurch gekennzeichnet, dass** der Client (1) ein Hardware-Sicherheitsmodul (20) aufweist, in dem ein einem Clientzertifikat (28) zugeordneter privater Schlüssel des Clients (1) nicht auslesefähig gespeichert ist.

4. Verfahren nach einem der vorhergehenden Ansprüche, **dadurch gekennzeichnet, dass** das Verfahren ferner die folgenden Schritte umfasst:
- Einmalige Übermittlung eines Clientzertifikats (28) an den ersten Server (2) und/oder den zweiten Server (3),
- nach erfolgreicher Anfrage des Clients (1) an den ersten bzw. an den zweiten Server (2, 3) Authentifizierung des Clients (1) gegenüber dem ersten Server (2) bzw. dem zweiten Server (3) als Inhaber des Clientzertifikats (28).

5. Verfahren nach einem der vorhergehenden Ansprüche, **dadurch gekennzeichnet, dass** nach erfolgreicher Authentifizierung des zweiten Servers (3) gegenüber dem Client (1) mindestens ein Reservezertifikat von mindestens einem weiteren Server an den Client (1) übertragen wird.

6. Verfahren nach Anspruch 5, **dadurch gekennzeichnet, dass** im Falle des Ausfalls des ersten Servers (2) und des zweiten Servers (3) iterativ vom Client (1) auf weitere Server zugegriffen wird, nachdem von diesen Reservezertifikate vertrauenswürdig zur Verfügung gestellt wurden.

7. Verfahren nach einem der vorhergehenden Ansprüche, **dadurch gekennzeichnet, dass** im Client (1), im ersten Server (2), im zweiten Server (3) und/oder in mindestens einem weiteren Server (4) die zur Authentifizierung als Inhaber des Hauptzertifikats (8, 26) und/oder Reservezertifikats (9, 27) notwendigen Daten in einem geschützten Speicher (21, 22, 23) nicht auslesefähig gespeichert sind.

8. Verfahren nach einem der vorhergehenden Ansprüche, **dadurch gekennzeichnet, dass** der Schritt der Authentifizierung die Verwendung eines dem Zertifikat (8, 26, 9, 27, 28) zugeordneten privaten Schlüssels durch den Inhaber (2, 3, 1) des Zertifikats (8, 26, 9, 27, 28) sowie einen Überprüfungsschritt mittels eines dem betreffenden Zertifikat (8, 26, 9, 27, 28) zugehörigen öffentlichen Schlüssels umfasst.

9. Verfahren nach einem der vorhergehenden Ansprüche, **dadurch gekennzeichnet, dass** die Authentifizierung und die Sicherung von Verbindungen durch das TLS-Protokoll oder ein vergleichbares Protokoll wie beispielsweise DTLS, IPSec oder CMS implementiert ist.

10. Verfahren nach einem der vorhergehenden Ansprüche, **dadurch gekennzeichnet, dass** der Client (1) als eine intelligente Gerätekomponente eines Internet der Dinge (Internet of Things) ausgebildet ist und der erste sowie der zweite Server (2, 3) als Gegenstellen für den Client (1) ausgebildet sind, mit denen der Client (1) kommunizieren kann.

11. Verfahren nach einem der vorhergehenden Ansprüche, **dadurch gekennzeichnet, dass** der Client (1) als Smart Meter Gateway eines intelligenten Geräts zur Erfassung eines Energie- oder Rohstoffverbrauchs ausgebildet ist und der erste sowie der zweite Server (2, 3) als zugeordneter Messstellen-Server ausgebildet sind.

## Claims

1. Method for producing failover in a network including a client (1) and a first server (2), wherein the method comprises at least the following steps:
one-time transmission of a main certificate (8, 26), which is assigned to the first server (2), and at least one reserve certificate (9, 27) to the client (1), and
submitting a request of the client (1) to the first server (2), wherein the first server (2) authenticates itself with respect to the client (1) as the owner of the main certificate (8, 26) after a successful request of the client (1) to the first server (2), **characterized in that** the network includes a second server (3), wherein
the reserve certificate (9, 27) is assigned to the second server (3), **in that** the client (1) submits a request to the second server (3) after an unsuccessful request of the client (1) to the first server (2) and the second server (3) authenticates itself with respect to the client (1) as the owner of the reserve certificate (9, 27), so that the client (1) can turn to the second server (3) directly without user intervention and without a later exchange of certificates (8, 9, 26, 27) if the request to the first server (2) has not been successful, **in that** the first server (2) and/or the second server (3) respectively contain a hardware security module (5, 6), in which a private key of the first or of the second server (2, 3) assigned to the main certificate (8, 26) or to the reserve certificate (9, 27) is stored in a manner to be not readable, **in that** a secure connection between the client (1) and the first server (2) or the second server (3) is established to transmit user data after a successful authentication with respect to the client (1) by the first server (2) or by the second server (3), and **in that** the transmission of the main certificate (8, 26) and of the at least one reserve certificate (9, 27) is effected prior to a connection of the client (1) to the network (4).

2. Method according to claim 1, **characterized in that** the client (1) comprises an access-protected memory (7, 23) or a write-once memory (7, 23) or a not-writable memory (7, 23), in which the main certificate (8, 26) and the reserve certificate (9, 27) are stored.

3. Method according to any one of the preceding claims, **characterized in that** the client (1) comprises a hardware security module (20) in which a private key of the client (1) assigned to a client certificate (28) is stored in a non-readable manner.

4. Method according to any one of the preceding claims, **characterized in that** the method further comprises the following steps:
- one-time transmission of a client certificate (28) to the first server (2) and/or to the second server (3),
- after successful request of the client (1) to the first or to the second server (2, 3), authentication of the client (1) with respect to the first server (2) or the second server (3) as the owner of the client certificate (28) .

5. Method according to any one of the preceding claims, **characterized in that** at least one reserve certificate is transmitted from at least one further server to the client (1) after a successful authentication of the second server (3) with respect to the client (1).

6. Method according to claim 5, **characterized in that** the client (1) accesses further servers in an iterative manner if the first server (2) and the second server (3) fail, after reserve certificates having trustfully been made available by these servers.

7. Method according to any one of the preceding claims, **characterized in that** the data which is required for authentication as the owner of the main certificate (8, 26) and/or of the reserve certificate (9, 27) is stored in a protected memory (21, 22, 23) in a non-readable manner in the client (1), in the first server (2), in the second server (3) and/or in at least one further server (4).

8. Method according to any one of the preceding claims, **characterized in that** the step of the authentication includes using a private key assigned to the certificate (8, 26, 9, 27, 28) by the owner (2, 3, 1) of the certificate (8, 26, 9, 27, 28) as well as a verification step by means of a public key associated with the concerned certificate (8, 26, 9, 27, 28).

9. Method according to any one of the preceding claims, **characterized in that** the authentication and the securing of connections is implemented by the TLS protocol, or by a comparable protocol such as DTLS, IPSec or CMS.

10. Method according to any one of the preceding claims, **characterized in that** the client (1) is configured as a smart device component of an Internet of Things, and the first and the second server (2, 3) are configured as counterparts for the client (1), with which the client (1) can communicate.

11. Method according to any one of the preceding claims, **characterized in that** the client (1) is configured as a smart meter gateway of an intelligent device for the detection of a consumption of energy or raw materials, and the first and the second server (2, 3) are configured as an associated measuring point server.

## Revendications

1. Procédé servant à fabriquer un système de sécurité anti-panne dans un réseau comprenant un client (1) et un premier serveur (2), dans lequel le procédé comprend au moins les étapes suivantes :
de transmission une fois d'un certificat principal (8, 26), qui est associé au premier serveur (2), et d'au moins un certificat de réserve (9, 27) au client (1), et
d'envoi d'une requête du client (1) au premier serveur (2), dans lequel une fois la requête du client (1) envoyée avec succès au premier serveur (2), le premier serveur (2) s'authentifie vis-à-vis du client (1) en tant que titulaire du certificat principal (8, 26), **caractérisé en ce que** le réseau comprend un deuxième serveur (3), dans lequel le certificat de réserve (9, 27) est associé au deuxième serveur (3), qu'après une requête du client (1) envoyée sans succès au deuxième serveur (3), le client (1) envoie une requête au deuxième serveur (3) et le deuxième serveur (3) s'authentifie vis-à-vis du client (1) en tant que titulaire du certificat de réserve (9, 27) si bien que le client (1) peut se tourner vers le deuxième serveur (3) directement sans intervention de l'utilisateur et sans un remplacement ultérieur de certificats (8, 9, 26, 27) si la requête n'a pas été envoyée avec succès au premier serveur (2), que le premier serveur (2) et/ou le deuxième serveur (3) contiennent respectivement un module de sécurité matériel (5, 6), dans lequel une clé privée, associée au certificat principal (8, 26) ou au certificat de réserve (9, 27), du premier ou du deuxième serveur (2, 3), est mémorisée sans pouvoir être lue, qu'après une authentification réalisée avec succès vis-à-vis du client (1) par le premier serveur (2) ou le deuxième serveur (3), une connexion sécurisée entre le client (1) et le premier serveur (2) ou le deuxième serveur (3) est établie aux fins de la transmission de données utiles, et que la transmission du certificat principal (8, 26) et de l'au moins un certificat de réserve (9, 27) est effectuée avant un raccordement du client (1) au réseau (4).

2. Procédé selon la revendication 1, **caractérisé en ce que** le client (1) présente une mémoire à accès sécurisé (7, 23) ou une mémoire inscriptible seulement une fois (7, 23) ou une mémoire non inscriptible (7, 23), dans laquelle le certificat principal (8, 26) et le certificat de réserve (9, 27) sont mémorisés.

3. Procédé selon l'une quelconque des revendications précédentes, **caractérisé en ce que** le client (1) présente un module de sécurité matériel (20), dans lequel une clé privée, associée à un certificat de client (28), du client (1) est mémorisée sans pouvoir être lue.

4. Procédé selon l'une quelconque des revendications précédentes, **caractérisé en ce que** le procédé comprend en outre les étapes suivantes :
- de transmission une seule fois d'un certificat de client (28) au premier serveur (2) et/ou au deuxième serveur (3),
- après envoi avec succès de la requête du client (1) au premier ou au deuxième serveur (2, 3), d'authentification du client (1) vis-à-vis du premier serveur (2) ou du deuxième serveur (3) en tant que titulaire du certificat de client (28).

5. Procédé selon l'une quelconque des revendications précédentes, **caractérisé en ce qu'**après une authentification réalisée avec succès du deuxième serveur (3) vis-à-vis du client (1), au moins un certificat de réserve est transmis par au moins un autre serveur au client (1).

6. Procédé selon la revendication 5, **caractérisé en ce que** dans le cas d'une panne du premier serveur (2) et du deuxième serveur (3), le client (1) accède de manière itérative à d'autres serveurs après que ceux-ci ont fourni avec fiabilité des certificats de réserve.

7. Procédé selon l'une quelconque des revendications précédentes, **caractérisé en ce que** dans le client (1), dans le premier serveur (2), dans le deuxième serveur (3) et/ou dans au moins un autre serveur (4), les données nécessaires à l'authentification en tant que titulaire du certificat principal (8, 26) et/ou du certificat de réserve (9, 27) sont mémorisées dans une mémoire (21, 22, 23) protégée sans pouvoir être lues.

8. Procédé selon l'une quelconque des revendications précédentes, **caractérisé en ce que** l'étape de l'authentification comprend l'utilisation d'une clé privée associée au certificat (8, 26, 9, 27, 28) par le titulaire (2, 3, 1) du certificat (8, 26, 9, 27, 28) ainsi qu'une étape de vérification au moyen d'une clé publique associée au certificat (8, 26, 9, 27, 28) concerné.

9. Procédé selon l'une quelconque des revendications précédentes, **caractérisé en ce que** l'authentification et la sécurité de connexions sont implémentées par le protocole TLS ou un protocole comparable tel que DTLS, IPSec ou CMS.

10. Procédé selon l'une quelconque des revendications précédentes, **caractérisé en ce que** le client (1) est réalisé sous la forme d'un composant d'appareil intelligent d'un internet des objets (Internet of Things), et le premier ainsi que le deuxième serveur (2, 3) sont réalisés sous la forme de postes distants pour le client (1), avec lesquels le client (1) peut communiquer.

11. Procédé selon l'une quelconque des revendications précédentes, **caractérisé en ce que** le client (1) est réalisé sous la forme d'une passerelle SMGW (Smart Meter Gateway) d'un appareil intelligent servant à détecter une consommation d'énergie et de matières premières et le premier ainsi que le deuxième serveur (2, 3) sont réalisés sous la forme de serveurs d'emplacements de mesure associés.
